Europäisches Patentamt

European Patent Office

Office européen des brevets

(19)

(11) EP 0 718 546 A1

## (12) EUROPÄISCHE PATENTANMELDUNG

(43) Veröffentlichungstag:
26.06.1996 Patentblatt 1996/26

(51) Int. Cl.⁶: **F21Q 3/00**, F21V 9/08

(21) Anmeldenummer: 95120256.3

(22) Anmeldetag: 21.12.1995

(84) Benannte Vertragsstaaten:
**AT BE CH DE FR GB IT LI NL**

(30) Priorität: 23.12.1994 DE 4446356

(71) Anmelder: **SIEMENS AKTIENGESELLSCHAFT**
**D-80333 München (DE)**

(72) Erfinder:
• **Bruns, Manfred, Dipl.-Ing.**
**D-91054 Erlangen (DE)**
• **Goerke, Reinhard, Dr.**
**B-1030 Brüssel (BE)**

(54) **Anwendungsverfahren von signalfarbenorientierter Lichtstrahlung und zugehörige Vorrichtung**

(57) Für verschiedene Zwecke ist es erwünscht, genau definierte Signalfarben als Lichtstrahlung zu verwenden. Gemäß der Erfindung wird zur Verwendung im Verkehrswesen, insbesondere zur Verwendung für die Flugfeldbefeuerung, die Farborientierung gezielt beeinflußt. Für eine Vorrichtung aus einer Lampe (10) mit Reflektor (20) und/oder Vorschaltprisma kommen erfindungsgemäß dichroitische Beschichtungen (201) auf den Reflektoren (20) und/oder den Vorschaltprismen oder anderer Elemente in Frage.

FIG 3

EP 0 718 546 A1

**Beschreibung**

Die Erfindung bezieht sich auf ein Anwendungsverfahren von signalfarbenorientierter Lichtstrahlung. Bei einer zugehörigen Vorrichtung sollen übliche Lichtquellen, insbesondere aber Entladungslampen, die in einem Gehäuse angeordnet sind, sowie einen Reflektor und/oder ein Vorschaltprisma für eine gerichtete Abstrahlung haben, verwendet werden.

Aus der EP-A-0 602 640 sind ein Verfahren und eine zugehörige optische Einrichtung zum Erzeugen von gerichtet abstrahlbarem Licht für Signal oder Beleuchtungszwecke bekannt, bei denen zum Erreichen einer spezifizierten, vorzugsweise gleichmäßigen Intensitätsverteilung des abgestrahlten Lichtes dieses zunächst einer Querschnitts-Anpassung und einer anschließenden Korrektur unterzogen wird. Durch die unterschiedlichen Lichtwege im Glas der Einrichtung sich ergebenden Fehlrichtungen des Lichtes spezifikationsgerecht korrigiert werden. Dabei wird die Lichtstrahlung über eine Optik mit optisch wirkenden Flächen, wie Reflektoren und Refraktoren, geleitet, so daß sich eine gewünschte Intensitätsverteilung ergibt. Eine Farbselektierung erfolgt gegebenenfalls ausschließlich über Filter, was zwangsläufig mit Verlusten an Lichtausbeute verbunden ist.

In der Praxis soll das Licht zur Verwendung im Verkehrswesen neben der geeigneten Lichtintensitätsverteilung bestimmte Signalfarben haben. Dafür werden bisher üblicherweise Filter verwendet.

Aufgabe der Erfindung ist es daher, ein Anwendungsverfahren von signalfarbenorientierter Lichtstrahlung anzugeben und die zugehörige Vorrichtung zu schaffen.

Die Aufgabe ist erfindungsgemäß dadurch gelöst, daß zur Verwendung von signalfarbenorientierter Lichtstrahlung im Verkehrswesen, insbesondere zur Verwendung für die Flugfeldbefeuerung, die Farborientierung der Strahlung gezielt beeinflußt wird. Erfindungsgemäß sind Filter nicht mehr zur Gewährleistung der Farbselektivität notwendig.

Bei einer zugehörigen Vorrichtung ist die Beeinflussung der Farborientierung der Lichtstrahlung erfindungsgemäß mittels unterschiedlicher Beschichtungsmaßnahmen möglich. Bei Verwendung einer Lampe mit einem Reflektor sind dichroitische Beschichtungen auf dem Reflektor aufgebracht. Ergänzend sind auch bestimmte Abdeckungen am Pumpstutzen einer üblichen Lampe geeignet, wofür Metall- oder Keramikbeschichtungen in Frage kommen. Neben Beschichtungen sind zusätzlich lasergeschriebene Strukturen an Reflektoren und/oder separaten optischen Bauelementen im erfindungsgemäßen Sinne realisierbar, wodurch insbesondere Beugungseffekte ausgenutzt werden können.

Vorteilhafterweise können die verschiedenen Maßnahmen miteinander kombiniert werden, so daß nunmehr die Möglichkeit gegeben ist, gezielt für bestimmte Anwendungen im Verkehrswesen bestimmte Signalfarben spezifikationsgerecht auszuwählen und zur Verfügung zu stellen. Wesentlich ist dabei, daß zur Farbselektion erstmalig ausschließlich mit Reflexion gearbetet werden kann und vorhandene Reflektorlampen nach einer Spezialbehandlung verwendet werden können.

Weitere Einzelheiten und Vorteile der Erfindung ergeben sich aus der nachfolgenden Figurenbeschreibung von Ausführungsbeispielen. Es zeigen in jeweils schematischer Darstellung

| | |
|---|---|
| Figur 1 | das sog. Farbdiagramm mit den Farborten entsprechend ICAO, |
| Figur 2 | ein übliches Unterflurfeuer für die Flugfeldbefeuerung, |
| Figur 3 | eine bei dem Unterflurfeuer gemäß Figur 2 verwendete Reflektorlampe mit aufgeteilten Ringzonen des Reflektors, |
| Figur 4 | ein Diagramm zur Auswahl der Bereiche in Figur 3, |
| Figur 5 und 6 | eine asymmetrische Reflektorlampe in zwei zueinander senkrechten Schnitten, |
| Figur 7 | die Draufsicht auf das Lichtaustrittsfenster der asymmetrischen Reflektorlampe gemäß Figur 5 und 6, |
| Figur 8 | ein Diagramm zur Verdeutlichung der Reflektorlampe gemäß Figur 5 bis 7, |
| Figur 9 | eine Lichtquelle mit einem speziellen Reflektor, |
| Figur 10 | eine Lichtquelle mit einer zur Signalfarbenorientie rung ausgebildeten Optik und |
| Figur 11 | eine Unterflur-Beleuchtungsvorrichtung mit zwei Lampen und zugehörigen Mitteln zur Signalfarbenorientierung. |

Die Figuren werden teilweise gemeinsam beschrieben.

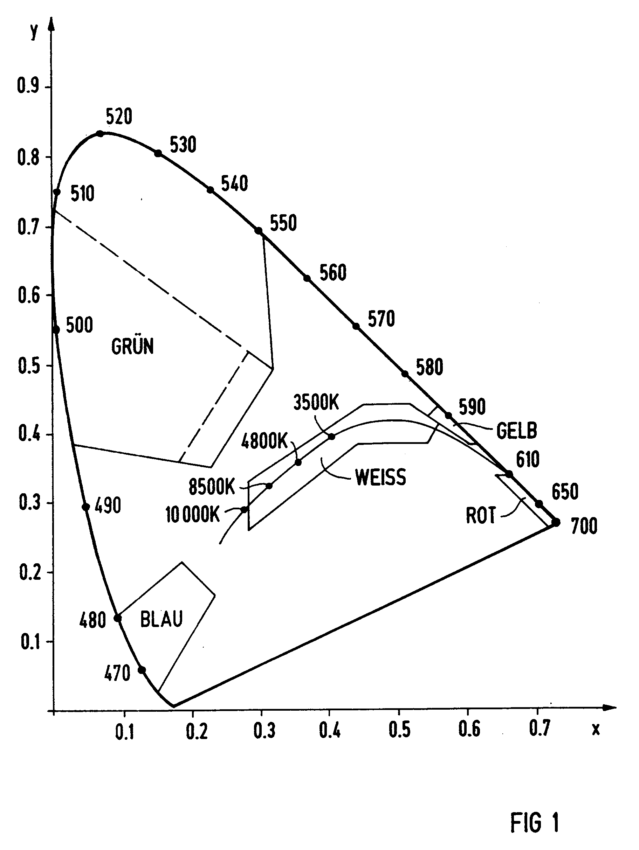

In Figur 1 sind in zweidimensionaler Darstellung die Farbwertanteile x und y aufgetragen, wobei bekanntermaßen die Beziehungen

$$x = \frac{X}{X+Y+Z}, \; y = \frac{Y}{X+Y+Z}, \; z = \frac{Z}{X+Y+Z}$$

mit X, Y und Z als sogenannte Normfarbwerte gelten. Letztere Normfarbwerte kennzeichnen die Farbe von Licht vorgegebener Spektralverteilung in eindeutiger Weise und zwar derart, daß X das "Rotgewicht", Y das "Grüngewicht" und Z das "Blaugewicht" definieren. Aufgrund der vorausgesetzten funktionalen Abhängigkeit x+y+z=1 ist eine zweidimensionale Darstellung aussagefähig.

Im Diagramm gemäß Figur 1 verlaufen die Wellenlängen für unterschiedliche Lichtfarben entlang einer Kurve. Die Lichtfarben ergeben sich vom kurzwelligen Licht der Farbe "BLAU" über "GRÜN" und "GELB" zum langwelligen Licht der Farbe "ROT" und zurück zum Ausgangspunkt "BLAU" entlang einer Geraden (sog."PURPURlinie").

Aus der Darstellung der Figur 1 ergeben sich bei den gegebenen Koordinaten des Diagrammes für die unterschiedlichen Lichtfarben entsprechende Farborte. Eingezeichnet sind die Farborte für die Farben BLAU, GRÜN, GELB und ROT und weiterhin für WEIß, wobei zu letzterem die Farbtemperaturen angegeben sind.

Das Farbdiagramm gemäß Figur 1 ist international genormt (ICAO, FAA) und dient zur Festlegung und Standardisierung der im Verkehrswesen verwendeten Signalfarben. Speziell für die Flugfeldbefeuerung kommt es darauf an, die festgelegten Signalfarben mit möglichst geringem Aufwand aus standardmäßig vorhandenen Lichtquellen zu erzeugen.

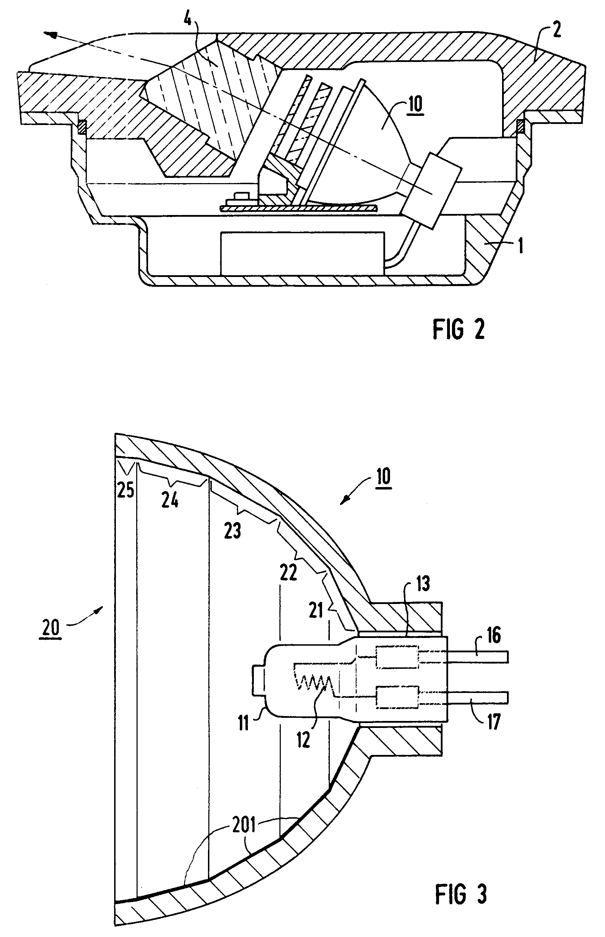

Für die Kennzeichnung von Rollbahnen auf Flugfeldern wird signalfarbenspezifiziertes Licht, beispielsweise mit den Farben rot und grün, benötigt. In Figur 2 ist ein bekanntes, sog. Rollwegfeuer dargestellt, das zur Verwendung als Beleuchtungseinrichtung im Boden der Flughafenrollbahnen od. dgl. einbaubar ist. Es ist eine untere Gehäusehälfte 1 und eine obere Gehäusehälfte 2 vorhanden, wobei die Gehäusehälfte 1, die in den Boden eingelassen ist, eine Lampe 10 zur Lichterzeugung enthält. Das von der Lampe 10 erzeugte Licht gelangt normalerweise über Filter in ein Austrittsprisma 4, das in den Gehäusedeckel 2 eingepaßt ist, und das geeignete optische Mittel zur Erzeugung einer gewünschten Intensitätsverteilung aufweisen kann.

Als Lampen 10 kommen für die vorliegende bestimmungsgemäße Verwendung klassische Glühlampen als Temperaturstrahler, Halogenglühlampen oder auch Leuchtstofflampen in Frage. Daneben sind auch Metalldampf-Niederdruck- oder Metalldampf-Hochdrucklampen verwendbar. In jüngerer Zeit neu entwickelte Lampen gewährleisten bei niedrigem Energieeinsatz höchstmögliche Lichtausbeute, was insbesondere für die Flugfeldbefeuerung von Bedeutung ist. Die Lichtspektren solcher bekannter Lampen können variieren, sie liegen aber durchweg im Feld "WEIß" des Farbdiagramms der Figur 1.

Eine in Figur 2 verwendete Lampe 10 ist im einzelnen in Figur 3 dargestellt. Sie besteht beispielsweise aus einem Glaskolben 11 mit einem Filament 12 und einem Kolbenfuß 13 mit entsprechenden Anschlüssen 16 und 17 sowie aus einem Reflektor 20.

Soweit ist eine derartige Reflektorlampe bekannt und standardmäßig auf dem Markt. In spezifischer Ausbildung gemäß Figur 3 ist der Reflektor 20 in Ringzonen 21 bis 25 aufgeteilt, die entsprechend den Reflexionswinkeln innerhalb des Hauptstrahlbereiches liegen. Diese Ringzonen 21 bis 25 sind nunmehr beschichtet und können eventuell facettiert sein.

Mit einer geeigneten Beschichtung 201 aus einem dichroitischen Material läßt sich erreichen, daß vom Reflektor 20 geeignete Wellenlängen aus der reflektierten Lichtstrahlung separiert werden. Unter dem Begriff "Dichroismus" als Teilgebiet des Pleochroismus wird die bekannte physikalische Erscheinung verstanden, daß bestimmte Materialien von einem sichtbaren Lichtspektrum einzelne Bereiche absorbieren, welche bei einem Lichtstrahl für den ordentlichen und für den außerordentlichen Strahl bei verschiedenen Wellenlängen liegen. Wenn beispielsweise polarisiertes Licht auf eine parallel zur optischen Achse geschnittene dichroitische Kristallplatte fällt, wird ein bestimmter Wellenlängenbereich ausgelöscht und das reflektierte Licht erscheint in der Komplementärfarbe. Somit kann mit Hilfe des Dichroismus eine spezifische Farborientierung erreicht werden. Wesentlich ist für die praktische Anwendung im Rahmen des Verkehrswesens, insbesondere zur Anwendung bei Vorrichtungen zur Flugfeldbefeuerung, daß dichroitisch wirksame Materialien als Schichten auf andere optische Elemente, insbesondere als Reflexionsschichten, aufgebracht werden können. In diesem Fall ist die reflektierte Strahlung farbselektiv. Ist das optische Element ein Prisma, sind Komplementäreffekte bei den Farben der durchstrahlten Strahlung einerseits und der reflektierten Strahlung andererseits möglich.

Mit dichroitischen Beschichtungen kann die sog. FAA-Spezifikation gemäß Figur 1 gezielt beeinflußt werden. Durch geeignete Materialwahl kann eine jeweils günstigste Koeffizientenmatrix mit den Elementen:

$$n_p \cdot d_p = n_q \cdot d_q \qquad (1)$$

entsprechend $\lambda/4$ gewählt werden, wobei $n_i$ der Brechungskoeffizient und $d_i$ die Dicke der Schicht bedeuten, wobei $i = p, q$ ist. Die dichroitische Beschichtung wird zweckmäßigerweise auf diejenigen Abstrahlbereiche des Filaments abgestimmt, welche die Hauptstrahlbereiche durch die Wirkung beispielsweise einer Minioptik im Prisma 4 gemäß Figur 2 beeinflussen und damit die Spezifikationen erfüllen.

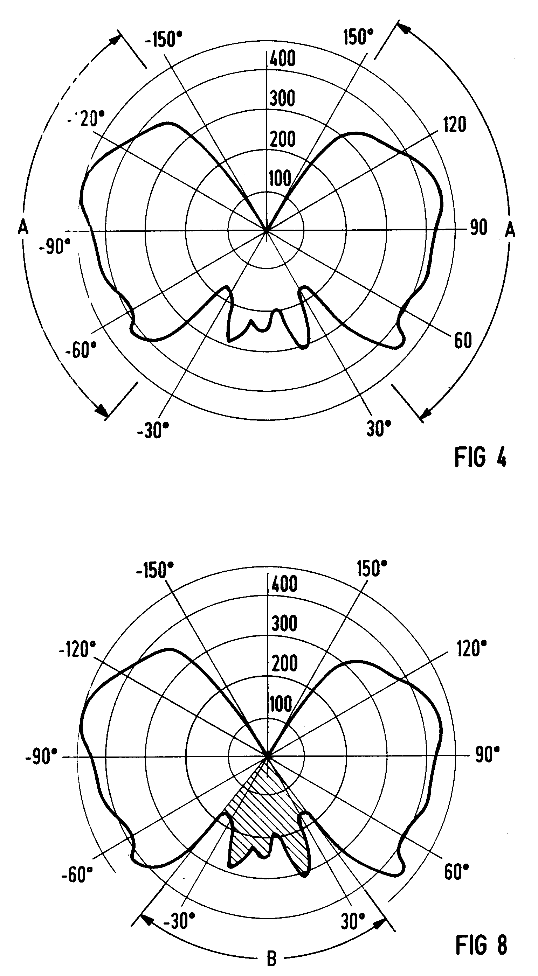

Aus dem Diagramm der Figur 4 sind die Hauptstrahlbereiche einer sogenannten "nackten" Halogenglühlampe gemäß Figur 3 ersichtlich. Axialzylindrisch in FIG 4 sitzt das Filament 12 entsprechend Figur 2 und in der Winkeldarstellung sind jeweils Linien gleicher Intensität verdeutlicht, woraus sich zwei Winkelbereiche A hoher Abstrahlintensität ergeben, welche die Hauptstrahlbereiche für das Licht mit Farborientierung definieren.

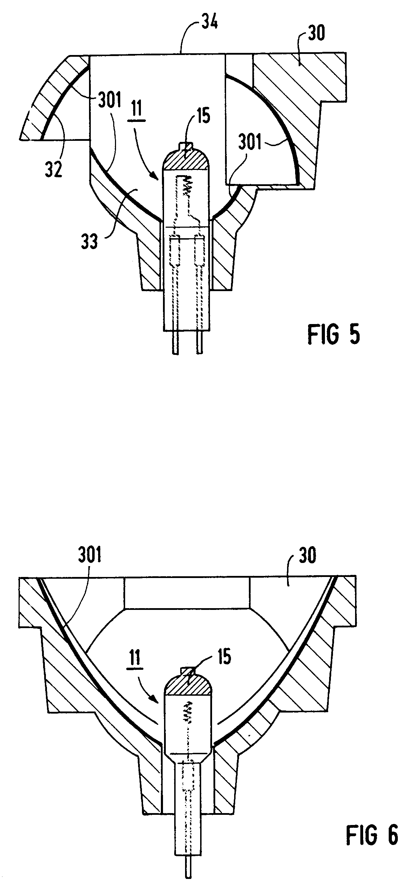

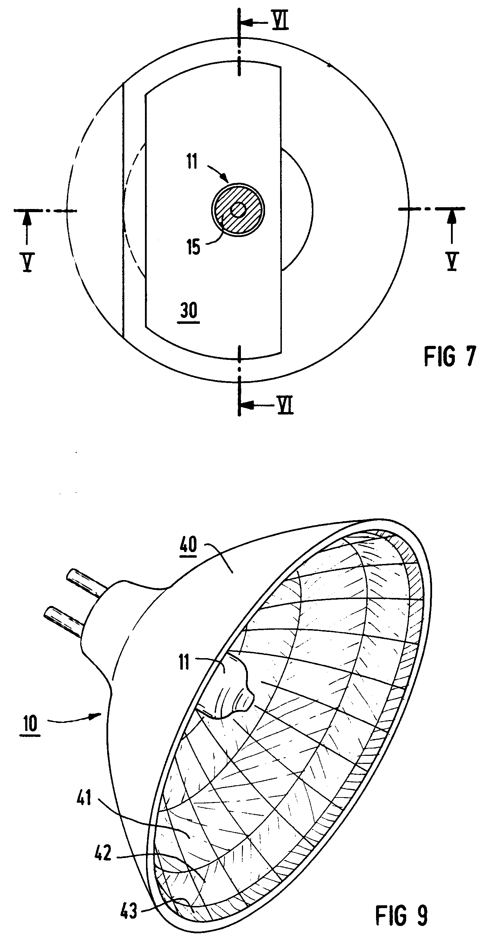

In den Figuren 5 und 6 ist eine speziell asymmetrische Reflektorlampe dargestellt, bei der ein Lampenkolben 10 entsprechend Figur 3 in einem Reflektor 30 mit spezifischer Geometrie angeordnet ist. Aus der zu Figur 5 und 6 senkrechten Projektion ergibt sich in Figur 7 im einzelnen die asymmetrische Geometrie des Reflektors 30.

Im Innern des Reflektors 30 sind beispielhaft zwei unterschiedliche Bereiche 32 und 33 dargestellt mit einem Lichtaustrittsfenster 34, das auf eine darauffolgende, nicht dargestellte Optik optimiert ist. Letztere kann beispielsweise als Rechteckprofil realisiert sein, wobei sich aus der Figur 7 ein rechteckähnliches Lichtaustrittsfenster im Gegenspiegelsystem ergeben würde.

Durch geeignete Beschichtungen 31 des Reflektors 30 und Auswahl der Dicke und/oder der Materialien lassen sich auch im Fall der Figur 5 und 6 geeignete Wellenlängen für die Farborientierung erreichen. Beispielsweise kommen folgende Materialien in Frage, wobei jeweils die zugehörigen optischen Brechungsindizes $n_i$ angegeben sind: $MgF_2$ (1,38), $SiO_2$ (1,47), $HF_2$ (1,92), $Z_i$-$O_2$ (1,90), $TiO_2$ (2,20), $ZnS$ (2,32), $Al_2O_3$ (1,70), $Y_2O_3$ (1,72). Gegebenenfalls können solche Beschichtungen aus λ/4- bzw. λ/8-Schichten unterschiedlicher Materialien aufgebaut sein, wobei jeweils Materialien mit stark unterschiedlichen optischen Dichten unter Berücksichtigung von Gleichung (1) einander abwechseln.

In der Figur 8 ist ein Diagramm entsprechend Figur 4 dargestellt, aus dem insbesondere der Abstrahlbereich B in Richtung auf den Pumpstutzen entnehmbar ist. Eine Abdeckung des Pumpstutzens, wie beispielsweise eine Metall- und/oder eine Keramikbeschichtung, erhöht die Farbsättigung des abgestrahlten Lichtes. Eine solche Maßnahme ist daher in Kombination mit der Beschichtung des Reflektors sinnvoll, um gezielt zu einer Intensitätsverbesserung des farborientierten Licht zu gelangen.

Die Lampe gemäß Figur 9 entspricht im wesentlichen der Lampe gemäß Figur 3, wobei in diesem Fall der Reflektor 40 in solche Ringbereiche geteilt ist, die lasergeschriebene Strukturelemente aufweisen. Durch wellenlängenselektiv herbeiführbare Interferenzerscheinungen läßt sich auch hier eine signalfarbenorientierte Lichtquelle realisieren. Solche Strukturen nutzen gezielt den Beugungseffekt bei Lichtstrahlung.

Zur Realisierung von Beugungseffekten auf Reflektoren bzw. Prismen, Linsen od. dgl. können auch mit Lasersystemen erzeugte "Wellen-Strukturen" ausgenutzt werden. Liniendichten, die der gewünschten Wellenlänge entsprechen, können bekanntlich mit einem Laser reproduzierbar "geschrieben" werden, was sich insbesondere für eine Massenfertigung anbietet. Alternativ können Beugungsgitter auch photolithographisch erzeugt und anschließend gegebenenfalls zusätzlich mit einer dichroitischen Beschichtung versehen werden.

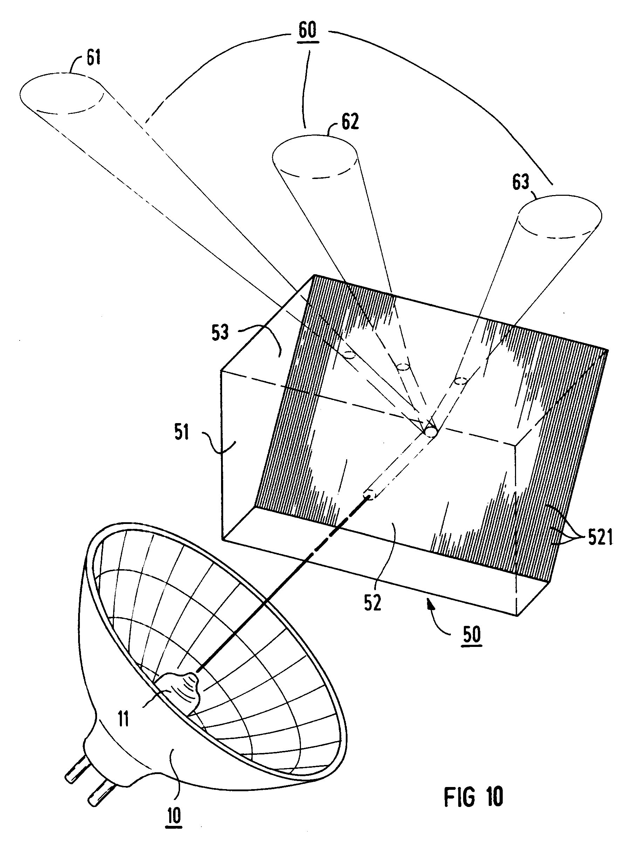

In Figur 10 ist eine Lampe mit Lichtquelle gemäß Figur 3 in einem Reflektor 20 angeordnet, der ein Prisma 50 als Optik zugeordnet ist. Die so gebildete Optik 50 hat eine lampenseitige Lichteintrittsfläche 51, eine Reflexionsfläche 52 mit Farberzeugungsstrukturen 521 auf der gegenüberliegenden Seite und eine Lichtaustrittsfläche 53. Dabei wird Licht derart in die Optik 50 eingestrahlt, daß nach Brechung an der Fläche 51 eine Totalreflexion an der gegenüberliegenden Fläche 52 mit Farbspezifizierung erfolgt. Dieses farborientierte Licht wird jeweils an der Austrittsfläche 53 gebrochen und verläßt das Prisma als unterschiedlich separate Strahlbündel 61 bis 63.

Wesentlich bei der Optik 50 ist, daß sich durch Oberflächenstrukturierungen einerseits und dichroitische Beschichtungen andererseits die unterschiedlichen optischen Effekte gezielt miteinander kombinieren lassen. Vorteilhaft ist in diesem Fall, daß der Reflektor einer herkömmlichen Lampe nicht bearbeitet zu werden braucht, sondern beispielsweise nur ein bereits vorhandenes Vorschaltprisma 4 gemäß Figur 2. Es kann aber auch als separates Bauelement zusätzlich zum Prisma vorhanden sein.

Durch Verwendung der in Figur 10 nur als Prinzip angedeuteten Optik 50 kann sich also beim austretenden Licht 60 beispielsweise eine signalfarbenorientierte Lichtverteilung mit Austrittskegeln 61 bis 63 ergeben. Die einzelnen Austrittskegel 61 bis 63 lassen sich mit optischen Mnitteln weiter separieren.

In Ergänzung zu den vorangehenden Beispielen ist es auch möglich, einen fertigen Reflektor im Sinne von geometrischen Veränderungen zu bearbeiten. Dabei kann der Reflektor in zwei oder mehrere Zonen mit gezielter Schichtdickenveränderung aufgespalten werden, wobei letztere stufenlos erfolgen kann. Eine Korrektur ist einerseits durch geometrische Anpassung der Reflexionswinkel im Reflektorbereich möglich, andererseits durch die Verwendung unterschiedlicher Materialien.

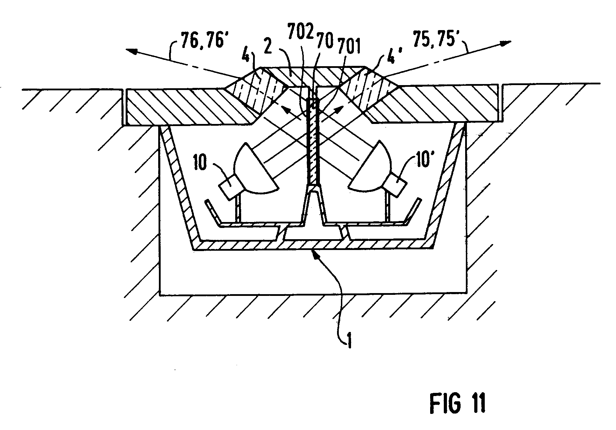

Bei einer Vorrichtung zur Unterflurbeleuchtung von Rollbahnen gemäß Figur 11 sind zwei identische Prismen 4 und 4' sowie zwei identische Lampen 10 und 10', die einander gegenüberstehend jeweils in schrägem Winkel über die Prismen 4 und 4' abstrahlen, vorhanden. Zwischen den beiden Lampen 10 und 10' ist ein signalfarbenorientiertes Bauelement 70 mit dichroitischen Oberflächenbeschichtungen 701 und 702 angeordnet, so daß aus dem abgestrahlten Licht der Lampen 10 bzw. 10' jeweils zwei Signalfarben separiert werden. Dabei wird jeweils ein Teil der Strahlung an den Schichten 71 oder 72 reflektiert und gelangt über das eine Prisma 4 nach außen, während ein anderer Teil der Strahlung das signalfarbenorientierte Bauelement 70 durchstrahlt und über das andere Prisma 4' nach außen gelangt.

Es ergibt sich somit die Möglichkeit, daß bei Aktivierung der Lichtquelle 10 über das Prisma 4 ein Lichtstrahl 76 mit rotem Farbwert und über das Prisma 4' ein Lichtstrahl 75 mit grünem Farbwert abgestrahlt wird. Wenn dagegen die zweite Lichtquelle 10' aktiviert ist, wird über das Prisma 4' ein Lichtstrahl 75' mit rotem Farbwert und über das Prisma 4 ein Lichtstrahl 76' mit grünem Farbwert abgestrahlt.

Insbesondere bei letzterer Anordnung unter Ausnutzung von gleichermaßen Reflexion und Transmission läßt sich in vorteilhafter Weise der Komplementäreffekt für eine Signalorientierung ROT-GRÜN erreichen. Dafür können zusätzlich Interferenz- bzw. Beugungseffekte ausgenutzt werden, die vorstehend im einzelnen erläutert wurden. Dabei ist es auch möglich, den physikalischen Effekt der Holographie auszunutzen.

Durch Kombination der im einzelnen beschriebenen Maßnahmen lassen sich weitere Varianten für signalfarbenorientierte Lichtquellen schaffen. Gemeinsam ist allen Beispielen, daß nicht zwingend Filter zur Farbselektierung benötigt werden, sondern vielmehr die Farborientierung gezielt durch insbesondere dichroitisch wirksame Schichten erreicht wird. Möglich und sinnvoll ist allerdings bei bereits hinsichtlich der Farborientierung bereits dichroitisch beeinflußtem Licht eine zusätzliche Verwendung von Einfach-Farbfiltern.

In Kombination mit den anderen Maßnahmen werden somit kostengünstige Lösungen mit verbesserter Farbselektierung realisiert, wobei gegebenenfalls die Farbwerte nur teilflächig korrigiert zu werden brauchen. In jedem Fall ist eine solche Korrektur einfacher als eine Filterung von weißem Licht.

Bei unterschiedlichen Lampen können Beschichtungen in verschiedener Weise wirken. Insbesondere bei Verwendung von Halogenglühlampen mit Filaments können die Beschichtungen auf geometrische Balance, bei Verwendung von Entladungslampen dagegen auf Farbbalance abgestimmt sein, da die Temperaturstrahler ein kontinuierliches Spektrum haben. Die so geschaffenen signalfarbenorientierten Lichtquellen können gegebenenfalls auch dimmbar ausgebildet sein.

**Patentansprüche**

1. Anwendungsverfahren von signalfarbenorientierter Lichtstrahlung **dadurch gekennzeichnet,** daß zur Verwendung im Verkehrswesen insbesondere zur Verwendung für die Flugfeldbefeuerung die Farborientierung gezielt beeinflußt wird.

2. Vorrichtung zur Verwendung bei einem Verfahren nach Anspruch 1 mit einer Lichtquelle, insbesondere Halogenglühlampe oder Gasentladungslampe, die in einem Gehäuse angeordnet ist und einen Reflektor und/oder ein Vorschaltprisma für eine gerichtete Abstrahlung hat, **dadurch gekennzeichnet,** daß zur Farborientierung dichroitische Beschichtungen auf dem Reflektor, dem Vorschaltprisma und/oder anderen Elementen verwendet werden.

3. Vorrichtung nach Anspruch 2, **dadurch gekennzeichnet,** daß die Beschichtungen der Reflektoren auf diejenigen Abstrahlbereiche der Lichtquelle abgestimmt sind, welche die Hauptstrahlbereiche bilden.

4. Vorrichtung nach Anspruch 3, **dadurch gekennzeichnet,** daß bei Verwendung von Halogenglühlampen mit Filaments die Beschichtungen auf geometrische Balance abgestimmt sind.

5. Vorrichtung nach Anspruch 3, **dadurch gekennzeichnet,** daß bei Verwendung von Entladungslampen die Beschichtungen auf Farbbalance abgestimmt ist.

6. Vorrichtung nach Anspruch 2, **dadurch gekennzeichnet,** daß das von der dichroitischen Beschichtung beeinflußte Licht durch Filter, insbesondere Einfachfarbfilter, korrigiert wird.

7. Vorrichtung nach Anspruch 2, wobei eine Lichtquelle aus einem Lampenkolben einem Pumpstutzen verwendet wird, **dadurch gekennzeichnet,** daß die Farbsättigung des reflektierten Lichtes durch eine Abdeckung am Pumpstutzen erhöht wird.

8. Vorrichtung nach Anspruch 7, **dadurch gekennzeichnet,** daß zur Abdeckung eine Metall- und/oder Keramik-Beschichtung verwendet wird.

9. Vorrichtung nach Anspruch 7, **dadurch gekennzeichnet,** daß lasergeschriebene Strukturen, auf dem Reflektor der Lampe und/oder weiterer optischer Elemente, z.B. einem Prisma, verwendet werden.

10. Vorrichtung nach Anspruch 2, **dadurch gekennzeichnet,** daß mit einer dichroitischen Beschichtungsholographie kombiniert wird.

11. Vorrichtung nach Anspruch 2, **dadurch gekennzeichnet,** daß die Reflektoren gezielt zum Zweck geometrischer Veränderungen bearbeitet sind.

12. Vorrichtung nach Anspruch 17, **dadurch gekennzeichnet,** daß der Reflektor in zwei oder mehrere Zonen mit Schichtdickenänderungen aufgeteilt ist.

13. Vorrichtung nach Anspruch 2, **dadurch gekennzeichnet,** daß die Schichtdickenänderungen kontinuierlich erfolgen.

14. Verfahren nach Anspruch 2, **dadurch gekennzeichnet,** daß durch geometrische Anpassung der Reflektionswinkel, insbesondere geeigneter Facetten, beispielsweise am Reflektor, die Farborientierung verbessert wird.

15. Vorrichtung nach Anspruch 2, **dadurch gekennzeichnet,** daß durch Kombination unterschiedlicher Materialien, insbesondere längs der Reflektorfläche, ein Interferenzeffekt mit Verstärkung der Signalfarbenorientierung erzielt wird.

16. Vorrichtung nach Anspruch 2, **dadurch gekennzeichnet,** daß durch Ausnutzung des Komplementäreffektes eine Signalfarbenorientierung "ROT-GRÜN" erzielt wird.

FIG 1

FIG 2

FIG 3

FIG 4

FIG 8

FIG 5

FIG 6

FIG 7

FIG 9

FIG 10

FIG 11

EP 0 718 546 A1

Europäisches Patentamt

**EUROPÄISCHER TEILRECHERCHENBERICHT** Nummer der Anmeldung

der nach Regel 45 des Europäischen Patent-übereinkommens für das weitere Verfahren als europäischer Recherchenbericht gilt

EP 95 12 0256

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int.Cl.6) |
|---|---|---|---|
| X | EP-A-0 233 001 (EMI PLC THORN)<br><br>* Spalte 1, Zeile 45 - Zeile 50 *<br>* Spalte 3, Zeile 5 - Zeile 14 *<br>* Spalte 4, Zeile 20 - Zeile 41;<br>Abbildungen 1-3,8 *<br>--- | 1,2,11,14 | F21Q3/00<br>F21V9/08 |
| X | WO-A-92 07758 (CONWAY DAVID HARRISON)<br>* Ansprüche 1,3-5; Abbildungen 3,4 * | 1,2 | |
| A | | 6 | |
| | --- | | |
| X | US-A-4 754 272 (ILLENBERG CORNELIUS J ET AL)<br>* Spalte 2, Zeile 6 - Zeile 17;<br>Abbildungen 1,2 *<br>--- | 1,2 | |
| A | PATENT ABSTRACTS OF JAPAN<br>vol. 017 no. 393 (E-1402) ,22.Juli 1993<br>& JP-A-05 074422 (TOSHIBA LIGHTING &<br>TECHNOL CORP) 26.März 1993,<br>* Zusammenfassung *<br>----- | 7,8 | |

| | | | RECHERCHIERTE SACHGEBIETE (Int.Cl.6) |
|---|---|---|---|
| | | | F21Q<br>F21V |

## UNVOLLSTÄNDIGE RECHERCHE

Nach Auffassung der Recherchenabteilung entspricht die vorliegende europäische Patentanmeldung den Vorschriften des Europäischen Patentübereinkommens so wenig, daß es nicht möglich ist, auf der Grundlage einiger Patentansprüche sinnvolle Ermittlungen über den Stand der Technik durchzuführen.
Vollständig recherchierte Patentansprüche:
Unvollständig recherchierte Patentansprüche:
Nicht recherchierte Patentansprüche:
Grund für die Beschränkung der Recherche:

Siehe Ergänzungsblatt B

| Recherchenort | Abschlußdatum der Recherche | Prüfer |
|---|---|---|
| DEN HAAG | 4.April 1996 | Martin, C |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.......................................................................
& : Mitglied der gleichen Patentfamilie, übereinstimmendes Dokument

EPO FORM 1503 03.82 (P04C09)

13

**EP 0 718 546 A1**

Europäisches
Patentamt

EP 95 12 0256    -B-

## MANGELNDE EINHEITLICHKEIT DER ERFINDUNG

Nach Auffassung der Recherchenabteilung entspricht die vorliegende europäische Patentanmeldung nicht den Anforderungen an die Eintheitlichkeit der Erfindung; sie enthält mehrere Erfindungen oder Gruppen von Erfindungen, nämlich:

UNVOLLSTÄNDIGE RECHERCHE

Vollständig recherchierte Patentansprüche  : 1-9,11-16
Nicht recherchierte Patentanspruch        : 10

Grund : Anspruch 10 ist unklar: in diesem Anspruch wird
        nicht definiert was eine dichroitischen Be-
        schichtungsholographie ist und was mit dieser
        kombiniert wird.